# FASCICULE DE BREVET EUROPEEN

(11) **EP 0 399 269 B1**
(45) Date de publication et mention de la délivrance du brevet: **14.04.1993**
(21) Numéro de dépôt: 90108530.8
(22) Date de dépôt: 07.05.1990
(51) Int. Cl.: A21B 2/00, A21B 1/48, H05B 6/64, A23L 3/00

(54) **Procédé et dispositif de pasteurisation et de précuisson de fond de pizza cru**
Verfahren und Vorrichtung zur Pasteurisierung und Vorkochen von rohen Pizzaböden
Method and device for pasteurising and precooking raw pizza bases

(30) Priorité: 22.05.1989 CH 1920/89
(43) Date de publication de la demande: 28.11.1990
(73) Titulaire: SOCIETE DES PRODUITS NESTLE S.A., 1800 Vevey (CH)
(72) Inventeur: Le Viet, Toai, CH-1800 Vevey (CH); Raetz, Eberhard, CH-1802 Corseaux (CH)

(56) Documents cités:
- FR-A- 1 026 103
- FR-A- 2 398 459
- FR-A- 2 569 538
- FR-A- 2 612 033
- GB-A- 2 097 639
- US-A- 3 881 403
- US-A- 4 439 656

## Description

L'invention concerne un procédé de pasteurisation et de précuisson de fond de pizza cru. L'invention concerne en outre le dispositif pour la mise en oeuvre de ce procédé.

Pour la cuisson des pizzas surgelées, il est possible d'envisager deux possibilités de présentation au consommateur. La première consiste à garnir un fond de pizza cru, à congeler ladite pizza et à la cuire avant consommation. Le problème des pizzas non précuites réside dans le fait que les fours ménagers à disposition permettent rarement une cuisson correcte, c'est-à-dire suffisante desdites pizzas, car ils ne permettent généralement pas d'atteindre des températures suffisamment élevées pour une bonne cuisson de la pâte. Par contre, comme ces pizzas ne subissent qu'une seule cuisson, on évite le dessèchement de la pâte.

Pour éviter le problème précité de l'insuffisance de cuisson de la pâte crue, on fait généralement une précuisson à l'usine dans des fours conventionnels appliquant une chaleur de convection et de contact qui a le désavantage de sécher spécialement les bords de la pâte exempte de garniture ou de sauce. Ce phénomène s'aggrave encore au cours de la seconde cuisson lors de la préparation finale dans le four de la ménagère.

Le but de la présente invention est de faire sur un fond de pizza une précuisson partielle avec gradient de température au sein de la pâte permettant d'obtenir un produit de qualité satisfaisante lors de la cuisson finale dans le four ménager, tout en évitant une évaporation exagérée d'eau de la pâte qui se traduirait par un dessèchement des bords non couverts par la garniture ou la sauce. La présente invention permet en outre une pasteurisation suffisante pour la distribution de la pizza en réfrigéré.

L'invention concerne un procédé de pasteurisation et de précuisson de fond de pizza cru, dans lequel on chauffe par micro-ondes une plaque en vitrocéramique pour la porter à une température comprise entre 250 et 300°C, on la sort du champ micro-ondes et on dispose sur ladite plaque le fond de pizza pendant environ 2 à 3 minutes.

On effectue selon l'invention une précuisson uniquement par contact en bas du fond de pizza dans une atmosphère froide.

Il faut utiliser une plaque de vitrocéramique ayant une bonne capacité d'absorption de l'énergie micro-ondes, c'est-à-dire permettant d'atteindre la température désirée dans un temps minimum. Ces plaques doivent en outre avoir un bon coefficient de transmission d'énergie. On utilise de préférence des plaques de la marque CERAN de Schott ou des plaques de la marque PYROCERAM de Dow Corning. Ces plaques contiennent des oxydes de fer et/ou des fibres de carbone. Il est bien entendu qu'elles peuvent contenir encore d'autres oxydes métalliques qui absorbent les micro-ondes.

Si on laisse les fonds de pizza sur les plaques de vitrocéramique préchauffées entre 2 et 3 minutes, cela permet à la face directement en contact avec la plaque de brunir et précuire et d'avoir un caractère croustillant. Mais le second intérêt de ce passage sur la plaque est de permettre une pasteurisation du fond de pizza. En effet, à la fin des 2 ou 3 minutes, la pâte en contact direct avec la plaque arrive à une température d'environ 200°C et la face supérieure du fond de pizza est à environ 90°C. Ce qui correspond à une bonne température de pasteurisation. La pasteurisation a pour effet d'arrêter l'activité de la levure. On a constaté expérimentalement que la précuisson selon l'invention permet de réduire la teneur en germes à une valeur acceptable pour un produit pasteurisé.

On peut donc envisager plusieurs utilisations pour le fond de pizza ainsi traité. Soit on y place la garniture, on congèle et on emballe. On a ainsi un produit précuit, utilisable avec un emballage classique, qu'on peut cuire ensuite chez le consommateur dans un four classique ou micro-ondes. Soit on utilise ce fond de pizza, sans garniture, pour la restauration dite rapide. Soit on garnit le fond de pizza destiné pour la vente comme produit réfrigéré. Comme la pizza ainsi obtenue est pasteurisée, on peut la conserver une quinzaine de jours au réfrigérateur.

Dans une forme de réalisation préférée du procédé selon l'invention, on chauffe la plaque de vitrocéramique entre 270 et 280°C et après l'avoir sortie du champ micro-ondes on y dépose le fond de pizza pendant environ 2 minutes 30.

La pâte à pizza est préparée de manière classique avec de la farine, de l'eau et de la levure.

La puissance du four utilisable pour chauffer les plaques de vitrocéramique n'est pas critique. On utilise de préférence un four ayant une puissance de l'ordre de 5 KWatts avec plusieurs générateurs micro-ondes.

L'invention concerne en outre le dispositif utilisable pour la mise en oeuvre de ce procédé. Il comprend une bande transporteuse avec une pluralité de plaques de vitrocéramique, ladite bande ayant une zone de passage dans un tunnel de champ micro-ondes et une zone de passage à l'air libre. Le tunnel micro-ondes comporte entre 3 et 7 générateurs micro-ondes ayant chacun une puissance de l'ordre 5 KWatts.

La bande transporteuse avance à une vitesse comprise entre 1 et 3 m/min. Pour avoir un bon effet de précuisson, on utilise une plaque de vitrocéramique ayant une épaisseur comprise entre 4 et 10 mm, de préférence de l'ordre de 8 mm. On arrive ainsi, grâce à ce dispositif, à préparer des fonds de pizza précuits en continu, lesdits fonds étant pasteurisés sans les mettre dans un four.

On évite ainsi l'inconvénient de la pasteurisation classique de pâte, à savoir son gonflement excessif lorsqu'elle est dans un four chaud.

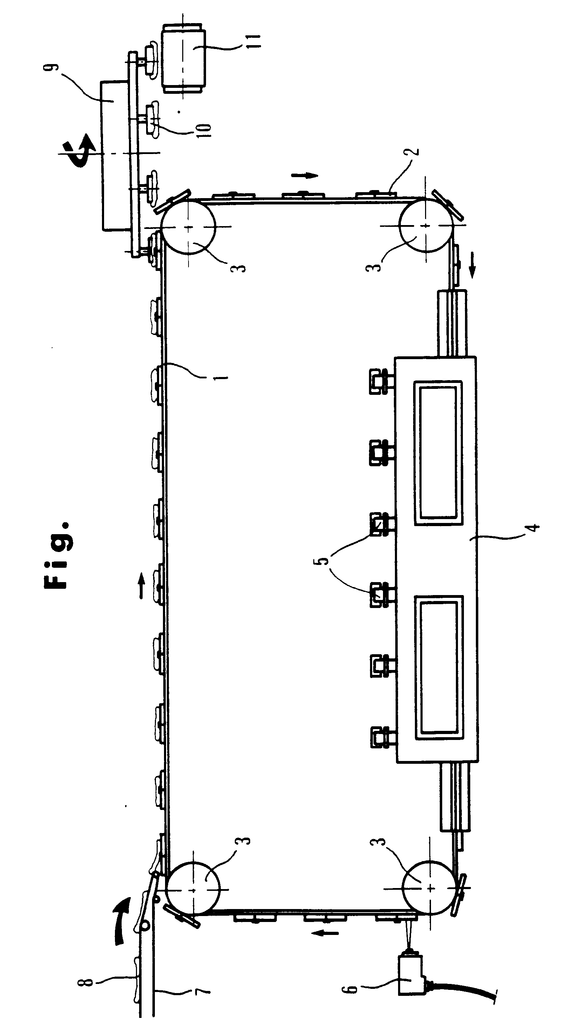

La suite de la description est faite en référence à la figure unique donnant une représentation schématique du dispositif selon l'invention. La bande transporteuse (1) comporte des plaques de vitrocéramique (2) et avance en boucle fermée selon les flèches sur des rouleaux de renvoi (3). Le tunnel de champ micro-ondes (4) comporte 6 générateurs micro-ondes (5). A la sortie du tunnel micro-ondes, on dispose un thermomètre infrarouge (6).

Le fonctionnement du dispositif est le suivant: on met en route les générateurs micro-ondes et la bande transporteuse qui se déplace d'abord à vide. Lorsque le thermomètre (6) détecte une température de l'ordre de 270°-280°C sur les plaques de vitrocéramique, la bande transporteuse (7) se met en route et amène des fonds de pizza cru (8) sur les plaques de vitrocéramique. La précuisson a lieu sur le tronçon entre les 2 rouleaux de renvoi successifs (3). Au bout du parcours, un carrousel rotatif (9) constitué par des plaques circulaires (10) dégage les fonds de pizza et les fait passer sur la bande transporteuse (11) pour le garnissage des fonds, leur emballage et leur congélation.

## Revendications

1. Procédé de pasteurisation et de précuisson de fond de pizza cru, caractérisé en ce qu'on chauffe par micro-ondes une plaque en vitrocéramique pour la porter à une température comprise entre 250 et 300°C, on la sort du champ micro-ondes et on dispose sur ladite plaque le fond de pizza pendant environ 2 à 3 minutes.

2. Procédé selon la revendication 1, caractérisé en ce qu'on porte la plaque de vitrocéramique à une température comprise entre 270 et 280°C.

3. Procédé selon l'une des revendications 1 et 2, caractérisé en ce qu'on laisse le fond de pizza sur la plaque de vitrocéramique pendant environ 2 min 30.

4. Procédé selon l'une des revendications 1 à 3, caractérisé en ce qu'on utilise une plaque en vitrocéramique contenant des oxydes de fer ou des fibres de carbone.

5. Dispositif pour la mise en oeuvre du procédé selon l'une des revendications 1 à 4, caractérisé en ce qu'il comprend une bande transporteuse avec une pluralité de plaques de vitrocéramique, ladite bande ayant une zone de passage dans un tunnel de champ micro-ondes et une zone de passage à l'air libre.

6. Dispositif selon la revendication 5, caractérisé en ce que les plaques de vitrocéramique ont une épaisseur comprise entre 4 et 10 mm.

## Claims

1. A process for pasteurizing and precooking raw pizza bases, characterized in that a vitroceramic plate is heated by microwaves to bring it to a temperature of 250 to 300°C, the plate is then removed from the microwave field and the pizza base is placed on the plate for about 2 to 3 minutes.

2. A process as claimed in claim 1, characterized in that the vitroceramic plate is heated to a temperature of 270 to 280°C.

3. A process as claimed in claim 1 or 2, characterized in that the pizza base is left on the vitroceramic plate for about 2.5 minutes.

4. A process as claimed in any of claims 1 to 3, characterized in that a vitroceramic plate containing iron oxides or carbon fibers is used.

5. An arrangement for carrying out the process claimed in any of claims 1 to 4, characterized in that it comprises a conveyor belt with a plurality of vitroceramic plates and with a zone in which it passes through a microwave tunnel and a zone in which it passes through open air.

6. An arrangement as claimed in claim 5, characterized in that the vitroceramic plates have a thickness of 4 to 10 mm.

## Patentansprüche

1. Verfahren zum Pasteurisieren und Vorbacken von rohen Pizzaböden, dadurch gekennzeichnet, daß man durch Mikrowellen eine Glaskeramikplatte erhitzt, um sie auf eine Temperatur von 250 bis 300°C zu bringen, daß man sie dem Mikrowellenfeld entnimmt und daß man etwa 2 bis 3 Minuten lang auf diese Platte den Pizzaboden auflegt.

2. Verfahren nach Anspruch 1, dadurch gekennzeichnet, daß die Glaskeramikplatte auf eine Temperatur von 270 bis 280°C gebracht wird.

3. Verfahren nach einem der Ansprüche 1 und 2, dadurch gekennzeichnet, daß man den Pizzaboden etwa 2 Minuten und 30 Sekunden lang auf der Glaskeramikplatte beläßt.

4. Verfahren nach einem der Ansprüche 1 bis 3, dadurch gekennzeichnet, daß man eine Glaskeramikplatte verwendet, die Eisenoxide oder Kohlenstoffasern enthält.

5. Vorrichtung zur Durchführung des Verfahrens nach einem der Ansprüche 1 bis 4, dadurch gekennzeichnet, daß sie ein Förderband mit einer Vielzahl von Glaskeramikplatten umfaßt, das eine Zone in einem Mikrowellenfeldtunnel und eine Zone im Freien durchläuft.

6. Vorrichtung nach Anspruch 5, dadurch gekennzeichnet, daß die Glaskeramikplatten eine Dicke von 4 bis 10 mm besitzen.
